# EUROPÄISCHE PATENTSCHRIFT

(11) **EP 3 452 303 B1**
(45) Veröffentlichungstag und Bekanntmachung des Hinweises auf die Patenterteilung: **23.10.2019**
(21) Anmeldenummer: 17719276.2
(22) Anmeldetag: 26.04.2017
(51) Int. Cl.: B60B 33/02

(54) **MOBILITÄTSHILFE**
MOBILITY AID
AIDE A LA MOBILITE

(30) Priorität: 02.05.2016 DE 102016108139
(43) Veröffentlichungstag der Anmeldung: 13.03.2019
(73) Patentinhaber: Otto Bock Mobility Solutions GmbH, 07426 Königsee (DE)
(72) Erfinder: HILDEBRAND, Dmitrij, 98693 Ilmenau (DE); DÖRING, Florian, 99089 Erfurt (DE)
(74) Vertreter: Gramm, Lins & Partner Patent- und Rechtsanwälte PartGmbB
(86) Internationale Anmeldenummer: PCT/EP2017/059915
(87) Internationale Veröffentlichungsnummer: WO 2017/191005

(56) Entgegenhaltungen:
- WO-A1-2013/131188
- AT-B- 89 500
- US-A1- 2011 221 161
- US-A1- 2011 291 387
- US-B1- 6 196 568

## Beschreibung

Die Erfindung betrifft eine Mobilitätshilfe mit einem ersten Bauteil, einem zweiten Bauteil und mindestens einem zwischen dem ersten Bauteil und dem zweiten Bauteil angeordneten Verbindungselement wobei das erste Bauteil mit dem wenigstens einen Verbindungselement formschlüssig verbunden ist und die Verbindung zumindest abschnittsweise eine n-zählige diskrete Rotationssymmetrie aufweist, und das zweite Bauteil mit dem wenigstens einen Verbindungselement formschlüssig verbunden ist und die Verbindung zumindest abschnittsweise eine p-zählige diskrete Rotationssymmetrie aufweist, wobei n und p verschieden sind.

Mobilitätshilfen im Sinne der vorliegenden Erfindung sind orthopädietechnische Vorrichtungen für Personen mit eingeschränkter Mobilität. Mobilitätshilfen können beispielsweise Rollstühle, Laufhilfen oder Rollatoren, oder Buggys oder andere, die Mobilität erhöhende Vorrichtungen und Geräte sein. Derartige Vorrichtungen und insbesondere Rollstühle sind aus dem Stand der Technik seit langem bekannt. Sie weisen eine ganze Reihe unterschiedlicher Bauteile auf, die lösbar miteinander verbunden sind, um eine individuelle Einstellung beispielsweise eines Winkels zwischen verschiedenen Bauteilen vornehmen zu können und so auf individuelle Bedürfnisse und Wünsche des Verwenders der Mobilitätshilfe eingehen zu können. Derartige Einstellungen sind unter Umständen nicht nur für den Komfort für den Benutzer der Mobilitätshilfe von Vorteil, sondern können die Funktionsfähigkeit der Mobilitätshilfe verbessern oder in bestimmten Situationen erst herstellen.

Eine derartige Anwendung betrifft die Befestigung der sogenannten Lenkräder eines Rollstuhls. Herkömmlicherweise verfügt der Rollstuhl über zwei große Hinterräder, die beispielsweise vom Verwender des Rollstuhls benutzt werden, um den Rollstuhl anzutreiben. Dazu können an den Hinterrädern Griffelemente oder Schienen vorhanden sein, die vom Benutzer des Rollstuhls ergriffen und bewegt werden können, so dass dadurch der Rollstuhl bewegt wird. Zusätzlich verfügen herkömmliche Rollstühle über zwei kleinere Vorderräder, die als "Lenkräder" bezeichnet werden. Sie sind herkömmlicherweise am Rahmen des Rollstuhls befestigt, wofür spezielle Befestigungselemente, beispielsweise Gabelelemente, verwendet werden. Um die Kurvenfahrt des Rollstuhls zu erlauben, müssen die Lenkräder um eine Hochachse drehbar gelagert sein. Diese Hochachse steht zumindest nahezu, vorteilhafterweise jedoch möglichst genau, optimalerweise exakt senkrecht auf dem Boden, auf dem sich der Rollstuhl befindet.

Herkömmlicherweise sind die Befestigungselemente, beispielsweise die Radgabeln oder Gabelelemente, mit denen eines der Lenkräder am Rahmen der Mobilitätshilfe befestigt ist, so ausgebildet, dass sich ein sogenannter Nachlauf ergibt. Der Nachlauf ist dabei die Strecke, die zwischen dem Radauflagepunkt, an dem das Lenkrad mit dem Boden in Kontakt kommt und dem sogenannten Spurpunkt liegt. Der Spurpunkt wird definiert als der Punkt, an dem die Hochachse, um die das Lenkrad schwenkbar oder drehbar gelagert ist, durch die Bodenfläche hindurchstößt.

Für eine optimale Funktionsweise der Mobilitätshilfe insbesondere in Kurvenfahrten ist ein möglichst genau eingestellter Nachlauf entscheidend. Es hat sich als vorteilhaft herausgestellt, die Hochachse möglichst exakt senkrecht auf die Bodenfläche, auf der sich die Mobilitätshilfe befindet, auszurichten. Dies ist jedoch nicht zwingend notwendig.

Aus dem Stand der Technik sind daher eine Reihe von Mobilitätshilfen bekannt, bei denen die Orientierung dieser Hochachse, um die die Lenkräder drehbar gelagert sind, eingestellt werden kann. Aus der US 8,662,516 B1 ist beispielsweise eine Verbindung bekannt, bei der zwei Zahnreihen kämmend miteinander ausgebildet sind. Durch Verschieben der jeweiligen Zahnreihen relativ zueinander können zwei Bauteile gegeneinander verdreht werden, wodurch die Orientierung und Ausrichtung dieser Hochachse eingestellt werden kann. Nachteilig ist jedoch, dass dies nur unter Einsatz von Werkzeug und nicht reproduzierbar ausgeführt werden kann.

Die US 6,196,568 B1 lehrt hingegen, den Winkel zwischen zwei Bauteile in unterschiedlichen Positionen arretierbar zu machen. Dazu verfügt das eine Bauteil über Vertiefungen oder Sackbohrungen, in denen federbelastet Stifte angeordnet sind.

In bestimmten Orientierungen werden diese Stifte mit Löchern, die in einem Element des zweiten Bauteils angeordnet sind, in Überdeckung gebracht und bewegen sich in diese Löcher hinein. Dadurch kommt es zu einer Arretierung der beiden Bauteile zueinander. Zum Verschieben oder Verändern dieser Orientierung müssen lediglich die Stifte durch ein dafür vorgesehenes Betätigungselement aus den Löchern des zweiten Bauteils herausgedrückt werden. Dann können die beiden Bauteile relativ zueinander verschwenkt werden. Diese Ausgestaltung hat den Vorteil, dass sie einfach zu verändern und reproduzierbar ist. Nachteilig ist jedoch, dass nur eine relativ grobe Einstellung vorgenommen werden kann, da beispielsweise zwölf Löcher und Stifte in den beiden Bauteilen vorhanden sind, und somit nur in einem Winkelabstand von jeweils 30° eine Arretierung der beiden Bauteile zueinander möglich ist. Diese Einstellmöglichkeit ist insbesondere für die Einstellung der Hochachse für die Dreh- oder Schwenkbewegung der Lenkräder zu grob.

Aus der US 8,256,786 B2 ist hingegen eine Befestigung bekannt, bei der zwei Bauteile in unterschiedlichen Schwenkwinkeln um eine Schwenkachse herum aneinander angeordnet werden können. Beide Bauteile verfügen über eine Mehrzahl von Bohrungen, die in bestimmten Winkelpositionen zur Überdeckung gebracht werden können. Dann wird eine Schraube durch die Bohrungen hindurchgeführt und die beiden Bauteile können relativ zueinander fixiert werden. Die Bohrungen sind dabei in beiden Bauteilen unregelmäßig über den Umfang verteilt, wodurch eine feine Einstellbarkeit des Winkels zwischen den beiden Bauteilen erreicht wird. Nachteilig ist jedoch, dass auch hier eine Veränderung dieses Winkels nur unter dem Einsatz von Werkzeug erreicht werden kann und zudem durch die unregelmäßige Anordnung der verschiedenen Bohrungen um die Schwenkachse herum eine hohe Genauigkeit bei der Fertigung eingehalten werden muss.

Aus der US 2011/0291387 A1 ist ein Rollstuhl bekannt, bei dem ein Neigungswinkel der Rückenlehne zur Sitzfläche in mehreren Stufen einstellbar ist. Dazu verfügen beide zueinander verstellbaren Bauteile über jeweils ein Formschlusselement, die in unterschiedlichen Positionen formschlüssig zusammenwirken können. Dies wird beispielsweise durch ineinander eingreifende Zähne, die an beiden Bauteilen vorgesehen sind, erreicht.

Auch der WO 2013/131188 A1 ist ein Rollstuhl zu entnehmen, bei dem zwei Bauteile in unterschiedlichen Orientierungen zueinander angeordnet werden können. Dazu sind an den beiden verbindbaren Bauteilen Formschlusselement mit Zähnungen vorhanden, die in einander eingreifen können. Ein weiteres Beispiel des Standes der Technik wird in Dokument AT 89 500 B offenbart.

Der Erfindung liegt daher die Aufgabe zugrunde, eine gattungsgemäße Mobilitätshilfe so weiterzuentwickeln, dass die beiden Bauteile in unterschiedlichen Schwenkpositionen um eine gemeinsame Schwenkachse herum aneinander angeordnet werden können, wobei der jeweils einzunehmende Winkel in möglichst kleinen Schritten sicher und reproduzierbar ohne Werkzeug einstellbar ist und zudem die Anforderungen an die Fertigungsgenauigkeit gesenkt werden können. Die Erfindung löst die gestellte Aufgabe durch eine Mobilitätshilfe gemäß dem Oberbegriff des Anspruchs 1, der sich dadurch auszeichnet, dass die n-zählige und die p-zählige Rotationssymmetrie die gleiche Symmetrieachse aufweisen. Eine n-zählige diskrete Rotationssymmetrie der formschlüssigen Verbindung bedeutet im Rahmen der vorliegenden Erfindung, dass das erste Bauteil und das Verbindungselement in n unterschiedlichen Winkeln relativ zueinander formschlüssig aneinander angeordnet werden können, wobei zwischen jeweils zwei benachbarten dieser Positionen ein Winkel von 360°/n liegt. Für n=2 ergibt sich folglich eine zwei-zählige diskrete Rotationssymmetrie, so dass das erste Bauteil und das Verbindungselement in zwei unterschiedlichen Positionen relativ zueinander formschlüssig miteinander verbunden werden können, die um 180° verschieden sind. Für n=5 ergibt sich eine fünf-zählige diskrete Rotationssymmetrie, so dass eine formschlüssige Verbindung zwischen dem ersten und dem Verbindungselement in fünf unterschiedlichen Positionen möglich ist, die um jeweils 72° auseinander liegen.

Analog bedeutet eine p-zählige diskrete Rotationssymmetrie, dass das zweite Bauteil und das Verbindungselement in p verschiedenen Positionen relativ zu-einander formschlüssig miteinander verbindbar sind, wobei ein Schwenkwinkel zwischen zwei benachbarten dieser Positionen 360°/p beträgt. Eine diskrete Rotationssymmetrie der formschlüssigen Verbindung bedeutet nicht zwangsläufig, dass beide miteinander durch diese Verbindung verbundenen Elemente, also beispielsweise eines der Bauteile und das Verbindungselement, selbst rotationssymmetrisch ausgebildet sein müssen oder entsprechende Anteile aufweisen. Es ist auch möglich, derartige Verbindungen mit diskreten Rotationssymmetrien auszubilden, ohne das irgendeines der beteiligen Bauteile oder Elemente rotationssymmetrisch ausgebildet ist. Dies kann beispielsweise erreicht werden, indem entsprechende Formschlusselemente beispielsweise nicht über den vollen Umfang um die Symmetrieachse herum angeordnet sind, sondern beispielsweise nur über einen Teil des Umfanges, beispielsweise über 180° oder 270° angeordnet sind.

Erfindungsgemäß sollen die Verbindungen zumindest abschnittsweise eine entsprechende Symmetrie aufweisen. Dies bedeutet, dass die jeweilige Verbindung zwar in unterschiedlichen Positionen zustande kommt und die durch sie verbundenen Bauteile folglich in unterschiedlichen Orientierungen zueinander angeordnet werden können, die äquidistant auseinanderliegen. Dies bedeutet beispielsweisen einen festen Versatzwinkel zwischen zwei benachbarten Verbindungspositionen, in dem die abschnittsweise rotationssymmetrische Verbindung erreicht werden kann. Eine abschnittsweise rotationssymmetrisch ausgestaltete Verbindung bedeutet jedoch, dass sich diese äquidistant nebeneinander befindlichen Positionen nicht über den gesamten Umfang eines Vollkreises erstrecken, sondern beispielsweise nur über 180° um die Symmetrieachse herum verteilt sind. Bevorzugt ist es jedoch so, dass beide formschlüssigen Verbindungen vollständig, also über den gesamten Umfang des Vollkreises, diskret rotationssymmetrisch ausgebildet sind.

Die Erfindung macht sich die Erkenntnis zu Nutze, dass durch die Verwendung zweier unterschiedlicher diskreter Rotationssymmetrien eine Einstellbarkeit des Winkels zwischen dem ersten Bauteil und dem zweiten Bauteil erreicht wird, die deutlich feiner ausgebildet ist, als dies nur durch eine der beiden Symmetrien ermöglicht würde. Nimmt man beispielsweise an, dass n=15 und p=16 ist, bedeutet dies, dass das erste Bauteil mit dem Verbindungselement in 15 unterschiedlichen Positionen verbindbar ist, die um jeweils 24° auseinander liegen. Das zweite Bauteil ist hingegen mit dem Verbindungselement in 16 unterschiedlichen Positionen verbindbar, die um jeweils 22,5° auseinander liegen. Dies bedeutet, dass das erste Bauteil relativ zu dem zweiten Bauteil in Schritten von 1,5° einstellbar ist.

Dies ist beispielsweise für die Einstellung eines Winkels der Hochachse relativ zur Ebene des Bodens, auf dem sich die Mobilitätshilfe befindet, durchaus ausreichend. Eine 15-zählige und eine 16-zählige rotationssymmetrische formschlüssige Verbindung lassen sich insbesondere aufgrund der Regelmäßigkeit der Symmetrie einfach fertigen, ohne dass zu große Anforderungen an die Genauigkeit und die Fertigungstoleranzen gestellt werden.

Mit anderen Worten bedeutet dies, dass ein Verbindungswinkel α zwischen einer ersten Bauteilrichtung des ersten Bauteils und einer zweiten Bauteilrichtung des zweiten Bauteils in Winkelschritten Δ_{α} einstellbar ist, die sich zu Δα=360/p-360/n berechnen lassen. Dabei sind die erste Bauteilrichtung die zweite Bauteilrichtung nicht notwendigerweise Symmetrieachsen oder Erstreckungsrichtungen der jeweiligen Bauteile, sondern können willkürlich, dann jedoch fest gewählt werden.

Vorteilhafterweise sind n und p teilerfremd. Dies bedeutet, dass es keine natürlichen Zahlen außer der 1 gibt, durch die beide Zahlen ganzzahlig teilbar sind. Auf diese Weise wird vermieden, dass es zu redundanten Orientierungen des ersten Bauteils und des zweiten Bauteils relativ zueinander kommt, in denen die Bauteile über das Verbindungselement relativ zueinander verbindbar sind.

Als besonders vorteilhaft hat sich herausgestellt, wenn die Differenz p und n 1 ist. Auf diese Weise wird der Winkelabschnitt Δα besonders klein, ohne dass n und p besonders groß werden müssten. Je kleiner n und p sind, desto einfacher lässt sich die jeweilige disktrete Rotationssymmetrie in der formschlüssigen Verbindung herstellen. Vorzugsweise ist beispielsweise am Verbindungselement eine Skala oder Anzeige angeordnet, beispielsweise aufgedruckt, aus der die aktuelle Position des ersten Bauteils relativ zum zweiten Bauteil beispielsweise bezogen auf eine Grundstellung oder Nullstellung zu entnehmen ist.

Erfindungsgemäß verfügen die n-zählige Rotationssymmetrie und die p-zählige Rotationssymmetrie über die gleiche Symmetrieachse. Diese ist vorteilhafterweise die Schwenkachse, um die auch die beiden Bauteile miteinander verschwenkt werden müssen, um von einer Verbindungsposition in eine andere Verbindungsposition zu kommen. Unter einer Verbindungsposition werden dabei die Positionen der beiden Bauteile relativ zueinander verstanden, in denen sowohl das erste Bauteil mit dem Verbindungselement als auch das zweite Bauteil mit dem Verbindungselement formschlüssig verbindbar sind.

Vorzugsweise werden die formschlüssigen Verbindungen durch an dem ersten Bauteil, dem zweiten Bauteil und dem Verbindungselement vorhandene Formschlusselement erreicht. Dabei sind natürlich die Formschlusselemente am ersten Bauteil korrespondierend zu Formschlusselementen am Verbindungselement ausgebildet. Auch die Formschlusselemente am zweiten Bauteil sind zu Formschlusselementen am Verbindungselement korrespondierend ausgebildet. Durch die unterschiedlichen diskreten Rotationssymmetrien sind die Formschlusselemente am ersten Bauteil und am zweiten Bauteil in aller Regel nicht korrespondierend ausgebildet.

In einer bevorzugten Ausgestaltung der Erfindung sind die Formschlusselemente für die Verbindung des ersten Bauteils mit dem Verbindungselement in einem anderen Abstand von der Symmetrieachse angeordnet, als die Formschlusselemente für die Verbindung des zweiten Bauteils mit dem Verbindungselement. Die Formschlusselemente können beispielsweise Stifte, Zapfen oder Bolzen einerseits und Vertiefungen oder Bohrungen andererseits sein. In einer besonders einfachen Ausgestaltung verfügt das Verbindungselement über zwei Ringe von Bohrungen, die in unterschiedlichen Abständen von der Symmetrieachse konzentrisch angeordnet sind. Dabei befinden sich in einem der beiden Ringe n Bohrungen und in dem anderen p Bohrungen. Es handelt sich um die Formschlusselemente, die jeweils zu Stiften oder Bolzen korrespondierend ausgebildet sind, die sich am ersten Bauteil oder am zweiten Bauteil befinden. Dabei ist es von Vorteil, wenn die Stifte oder Bolzen, die sich am ersten Bauteil befinden, in die Bohrung des einen Ringes eingreifen können, während die Stifte oder Bolzen, die sich am zweiten Bauteil befinden, in dem zweiten der Ringe aus Bohrungen eingreifen können. Selbstverständlich können die Formschlusselemente auch in Form von Zähnen oder Verzahnungen ausgebildet sein, die in verbundenem Zustand in einander eingreifen.

Vorzugsweise sind das erste Bauteil und das zweite Bauteil in Richtung aufeinander zu durch wenigstens ein Vorspannelement vorgespannt. Dieses Vorspannelement ist vorzugsweise ein Federelement, insbesondere eine Zugfeder. Auf diese Weise lässt sich ein Winkel zwischen den beiden Bauteilen auf besonders einfache Weise einstellen. Es müssen lediglich die beiden Bauteile so weit voneinander beabstandet werden, dass sowohl die formschlüssige Verbindung zwischen dem ersten Bauteil und dem Verbindungselement als auch die formschlüssige Verbindung zwischen dem zweiten Bauteil und dem Verbindungselement gelöst werden. Dazu müssen die beiden Bauteile gegen die Vorspannkraft des Vorspannelementes voneinander beabstandet werden. In diesen voneinander beabstandeten Zustand können die Bauteile relativ zum Verbindungselement gedreht und in diese neue Position gebracht werden. Anschließend muss die aufgebrachte Kraft, die gegen die Vorspannkraft des Vorspannelementes wirkt, entfernt werden, so dass die vom Vorspannelemente aufgebrachte Vorspannkraft die beiden Bauteile wieder aufeinander zu bewegt und somit die formschlüssigen Verbindungen wieder herstellt. Alternativ oder zusätzlich dazu kann auch eine Feder vorhanden sein, die das erste Bauteil und das zweite Bauteil in entgegengesetzter Richtung, also voneinander weg, vorspannt. Dadurch kann das Öffnen oder Trennen der formschlüssigen Verbindung erleichtert werden. Vorzugsweise sind in diesem Fall das erste Bauteil und das zweite Bauteil in dem Zustand, in dem sie beide mit dem wenigstens einen Verbindungselement verbunden sind, miteinander verriegelt.

Vorzugsweise handelt es sich bei dem ersten Bauteil oder dem zweiten Bauteil um eine Rückenlehne oder eine Sitzfläche der Mobilitätshilfe. In diesem Fall lassen sich die Sitzposition und die Position der Rückenlehne besonders einfach und genau reproduzierbar, leicht und sicher einstellen. Vorteilhafterweise ist das erste Bauteil oder das zweite Bauteil mit einem Befestigungselement eines Rades, insbesondere eines Lenkrades, der Mobilitätshilfe verbunden. Dies geschieht besonders vorzugsweise so, dass durch eine Veränderung der Positionierung des ersten Bauteils relativ zum zweiten Bauteil eine Orientierung und Ausrichtung der Hochachse einstellbar ist, um die eines der Lenkräder der Mobilitätshilfe drehbar ist.

Die Formschlusselemente sind vorteilhafterweise an wenigstens einer Stirnseite des wenigstens einen Verbindungselementes angeordnet. Alternativ oder zusätzlich dazu können Formschlusselemente auch umfangsseitig, also in radialer Richtung bezüglich der Symmetrieachse der beiden diskreten Rotationssymmetrien angeordnet sein.

Um eine besonders feine Unterteilung der unterschiedlichen Positionierungen des ersten Bauteils und des zweiten Bauteils relativ zueinander zu ermöglichen, können beispielsweise auch mehr als ein Verbindungselement vorhanden sein. So können beispielsweise zwei Verbindungselemente vorhanden sein, von denen eines mit dem ersten Bauteil und das andere mit dem zweiten Bauteil formschlüssig miteinander verbunden sind, wobei die erfindungsgemäß vorhandenen diskreten Rotationssymmetrien auftreten. Zwischen dem ersten Verbindungselement und dem zweiten Verbindungselement kann dann eine weitere formschlüssige Verbindung erzeugt werden, indem beispielsweise zusätzliche Formschlusselemente an den Flächen der beiden Verbindungselemente angeordnet sind, die dem jeweils anderen Verbindungselement zugewandt sind. Diese Verbindung kann eine dritte, I-zählige diskrete Rotationssymmetrie aufweisen, wodurch der Unterteilungsgrad weiter erhöht und die Einteilung deutlich verfeinert werden kann.

Mit Hilfe der beiliegenden Figuren wird nachfolgend ein Ausführungsbeispiel der vorliegenden Erfindung näher erläutert. Es zeigt:
- Figur 1 -: einen Teil einer Mobilitätshilfe gemäß einem Ausführungsbeispiel der vorliegenden Erfindung im montierten Zustand,
- Figur 2 -: den Ausschnitt einer Explosionsdarstellung aus einer ersten Perspektive,
- Figur 3 -: den Ausschnitt aus der Explosionsdarstellung aus einer zweiten Perspektive und
- Figur 4 -: ein Verbindungselement.

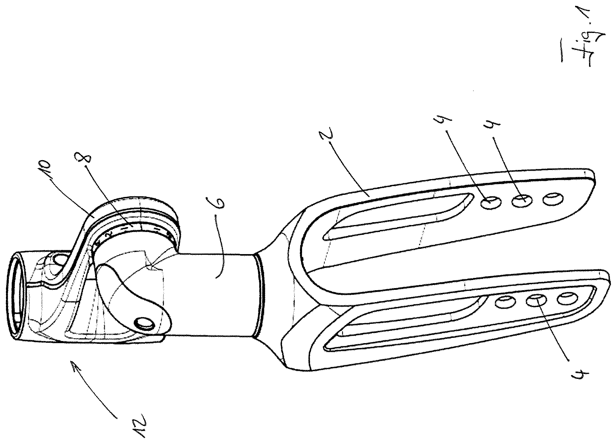

Figur 1 zeigt eine Gabel 2 an der ein nicht gezeigtes Lenkrad einer Mobilitätshilfe befestigt werden kann. Dafür verfügt die Gabel 2 über Bohrungen 4 durch die eine Nabe des Rades hindurchgesteckt werden kann. Im oberen Bereich ist die Gabel 2 mit einem ersten Bauteil 6 verbunden und kann relativ zu diesem um eine nicht dargestellte Hochachse, die in Figur 1 von oben nach unten verläuft, gedreht werden. Das erste Bauteil 6 ist über ein Verbindungselement 8 an einem zweiten Bauteil 10 befestigt. Dieses verfügt an seinem dem ersten Bauteil 6 abgewandten Ende über eine Befestigungsvorrichtung 12, mit der es an einem Rahmen der Mobilitätshilfe befestigt werden kann.

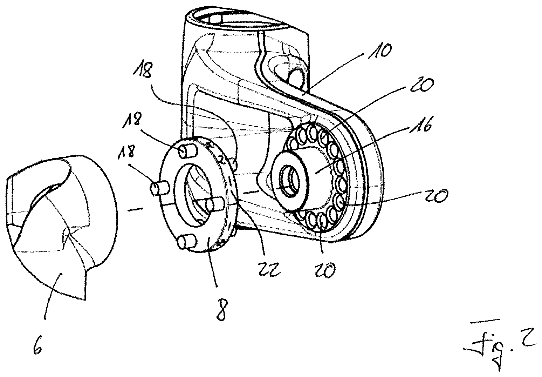

Figur 2 zeigt einen vergrößerten Ausschnitt aus einer Explosionsdarstellung der in Figur 1 gezeigten Bauteile. Man erkennt das zweite Bauteil 10 und das erste Bauteil 6 sowie das Verbindungselement 8. Das Verbindungselement 8 verfügt über eine große zentrale Öffnung 14 mit der es auf einen Vorsprung 16 aufgesteckt werden kann, der Teil des zweiten Bauteils 10 ist. Man erkennt am Verbindungselement 8 auf beiden Seiten Stifte 18, die im gezeigten Ausführungsbeispiel einstückig mit dem Verbindungselement 8 ausgebildet sind. Dies ist jedoch nicht zwangsläufig nötig. Um den Vorsprung 16 am zweiten Bauteil 10 herum sind eine Mehrzahl von Vertiefungen 20 angeordnet. Die Stifte 18, die am Verbindungselement 8 auf der dem zweiten Bauteil 10 zugewandten Seite angeordnet sind, sind so positioniert, dass sie alle gleichzeitig in eine dieser Vertiefungen 20 eingreifen. Im gezeigten Ausführungsbeispiel verfügt das zweite Bauteil 10 über 15 Vertiefungen 20, die den äquidistanten Schritten um eine Symmetrieachse herum, die die Mittelachse des Vorsprungs 16 bildet, angeordnet sind. Daher ist das Verbindungselement 8 in 15 unterschiedlichen Positionen mit dem zweiten Bauteil 10 formschlüssig verbindbar.

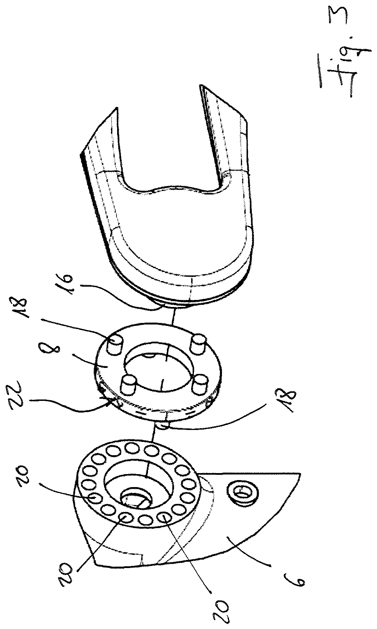

Figur 3 zeigt die in Figur 2 gezeigten Bauteile aus einer anderen Perspektive. Man erkennt, dass das erste Bauteil 6 ebenfalls über Vertiefungen 20 verfügt, die äquidistant um die gemeinsame Symmetrieachse, die wieder die zentrale Mittelachse des Vorsprungs bildet, herum angeordnet sind. Das erste Bauteil 6 verfügt über 16 Vertiefungen 20, in die die Stifte 18 des Verbindungselementes 8, die auf der dem ersten Bauteil 6 zugewandten Seite des Verbindungselementes 8 angeordnet sind, eingreifen können. Das Verbindungselement 8 ist folglich in 16 unterschiedlichen Positionen mit dem ersten Bauteil 6 formschlüssig verbindbar.

Die formschlüssige Verbindung zwischen dem Verbindungselement 8 und dem ersten Bauteil 6 verfügt folglich über eine 16-zählige Rotationssymmetrie, so dass n=16 ist. Im Gegensatz dazu ist p=15, weil die formschlüssige Verbindung zwischen dem Verbindungselement 8 und dem zweiten Bauteil 10 15-zählig ist.

Am Verbindungselement 8 befindet sich eine Skala 22, anhand derer abgelesen werden kann, in welcher Position sich das Verbindungselement 8 relativ zum zweiten Bauteil 10 und relativ zum ersten Bauteil 6 befindet. Dazu ist am ersten Bauteil 6 eine Markierung 24 angeordnet.

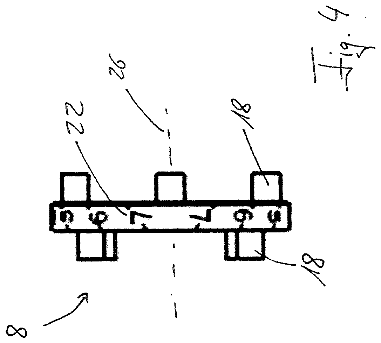

Figur 4 zeigt das Verbindungselement 8 mit der gemeinsamen Symmetrieachse 26, die sowohl Symmetrieachse der n-zähligen Rotationssymmetrie der formschlüssigen Verbindung zwischen dem ersten Bauteil 6 und dem Verbindungselement 8 als auch Symmetrieachse der p-zähligen Rotationssymmetrie zwischen dem zweiten Bauteil 10 und dem Verbindungselement 8 ist. Auf beiden Seiten des Verbindungselementes 8 sind die Stifte 18 zu erkennen, die in die nicht gezeigten Vertiefungen 20 im ersten Bauteil 6 und im zweiten Bauteil 10 eingreifen. Durch die unterschiedliche Anzahl der Vertiefungen 20 ist der Abstand zwischen zwei benachbarten Vertiefungen 20 im ersten Bauteil 6 verschieden von dem Abstand im zweiten Bauteil 10. Dadurch kann das Verbindungselement 8 nur in einer Ausrichtung zwischen dem ersten Bauteil 6 und dem zweiten Bauteil 10 angeordnet werden. Dies bedeutet, dass die Stifte 18, die auf einer Seite des Verbindungselementes 8 angeordnet sind und beispielsweise in die Vertiefungen 20 des zweiten Bauteils 10 gemeinsam eingreifen können, in die Vertiefungen 20 des ersten Bauteils 6 aufgrund der unterschiedlichen Abstände zwischen den Vertiefungen nicht eingreifen können. Auf diese Weise wird eine fehlerhafte Anordnung der Bauteile relativ zueinander verhindert.

### Bezugszeichenliste

- 2: Gabel
- 4: Bohrung
- 6: erstes Bauteil
- 8: Verbindungselement
- 10: zweites Bauteil
- 12: Befestigungsvorrichtung
- 14: Öffnung
- 16: Vorsprung
- 18: Stift
- 20: Vertiefung
- 22: Skala
- 24: Markierung
- 26: Symmetrieachse

## Patentansprüche

1. Mobilitätshilfe mit
- einem ersten Bauteil (6),
- einem zweiten Bauteil (10) und
- mindestens einem zwischen dem ersten Bauteil (6) und dem zweiten Bauteil (10) angeordneten Verbindungselement (8),
wobei
- das erste Bauteil (6) mit dem wenigstens einen Verbindungselement (8) formschlüssig verbunden ist und die Verbindung zumindest abschnittsweise eine n-zählige diskrete Rotationssymmetrie aufweist, und
- das zweite Bauteil (10) mit dem wenigstens einen Verbindungselement (8) formschlüssig verbunden ist und die Verbindung zumindest abschnittsweise eine p-zählige diskrete Rotationssymmetrie aufweist,
wobei die n-zählige und die p-zählige Rotationssymmetrie die gleiche Symmetrieachse (26) aufweisen, **dadurch gekennzeichnet, dass** n und p verschieden sind.

2. Mobilitätshilfe nach Anspruch 1, **dadurch gekennzeichnet, dass** n und p teilerfremd sind.

3. Mobilitätshilfe nach Anspruch 1 oder 2, **dadurch gekennzeichnet, dass** die Differenz zwischen n und p 1 ist.

4. Mobilitätshilfe nach einem der vorstehenden Ansprüche, **dadurch gekennzeichnet, dass** die formschlüssigen Verbindungen durch an dem ersten Bauteil (6), dem zweiten Bauteil (10) und dem Verbindungselement (8) vorhandene Formschlusselemente (18, 20) erreicht werden.

5. Mobilitätshilfe nach Anspruch 4, **dadurch gekennzeichnet, dass** die Formschlusselement für die Verbindung des ersten Bauteils (6) mit dem Verbindungselement (8) in einem anderen Abstand von der Symmetrieachse (26) angeordnet sind, als die Formschlusselemente für die Verbindung des zweiten Bauteils (10) mit dem Verbindungselement (8).

6. Mobilitätshilfe nach einem der vorstehenden Ansprüche, **dadurch gekennzeichnet, dass** das erste Bauteil (6) und das zweite Bauteil (10) in Richtung aufeinander zu durch wenigstens ein Vorspannelement vorgespannt sind.

7. Mobilitätshilfe nach Anspruch 6, **dadurch gekennzeichnet, dass** das Vorspannelement ein Federelement, insbesondere eine Zugfeder, aufweist.

8. Mobilitätshilfe nach einem der vorstehenden Ansprüche, **dadurch gekennzeichnet, dass** das erste Bauteil (6) oder das zweite Bauteil (10) eine Rückenlehne oder eine Sitzfläche der Mobilitätshilfe ist.

9. Mobilitätshilfe nach einem der vorstehenden Ansprüche, **dadurch gekennzeichnet, dass** das erste Bauteil (6) oder das zweite Bauteil (10) mit einem Befestigungselement eines Rades, insbesondere eines Lenkrades, der Mobilitätshilfe verbunden ist.

## Claims

1. A mobility aid with
- a first structural component (6),
- a second structural component (10) and
- at least one connection element (8) arranged between the first structural component (6) and the second structural component (10),
wherein
- the first structural component (6) is positively connected to the at least one connection element (8) and the connection at least partially features an n-fold discrete rotational symmetry, and
- the second structural component (10) is positively connected to the at least one connection element (8) and the connection at least partially features a p-fold discrete rotational symmetry,
wherein the n-fold and p-fold rotational symmetry have the same axis of symmetry (26), **characterized by the fact that** n and p are different.

2. The mobility aid according to claim 1, **characterized by** the fact that n and p are coprime.

3. The mobility aid according to claim 1 or 2, **characterized by** the fact that the difference between n and p is 1.

4. The mobility aid according to one of the above claims, **characterized by** the fact that the positive connections are achieved by positive-locking elements (18, 20) provided on the first structural component (6), the second structural component (10) and the connection element (8).

5. The mobility aid according to claim 5, **characterized by** the fact that the positive-locking elements for the connection of the first structural component (6) to the connection element (8) are arranged at a different distance from the symmetrical axis (26) than the positive-locking elements for the connection of the second structural component (10) to the connection element (8).

6. The mobility aid according to one of the above claims, **characterized by** the fact that the first structural component (6) and the second structural component (10) are pre-loaded towards one another by way of at least one preloading element.

7. The mobility aid according to claim 6, **characterized by** the fact that the preloading element comprises a spring element, especially a tension spring.

8. The mobility aid according to one of the above claims, **characterized by** the fact that the first structural component (6) or the second structural component (10) is a backrest or a seating surface of the mobility aid.

9. The mobility aid according to one of the above claims, **characterized by** the fact that the first structural component (6) or the second structural component (10) is connected to a fixing element of a wheel, especially a steering wheel, of the mobility aid.

## Revendications

1. Aide à la mobilité comportant
- un premier composant (6),
- un deuxième composant (10), et
- au moins un élément de liaison (8) agencé entre le premier composant (6) et le deuxième composant (10),
dans laquelle
- le premier composant (6) est relié par coopération de formes audit au moins un élément de liaison (8), et la liaison présente au moins par tronçons une symétrie de révolution discrète d'ordre n, et
- le deuxième composant (10) est relié par coopération de formes audit au moins un élément de liaison (8) et la liaison présente au moins par tronçons une symétrie de révolution discrète d'ordre p,
dans laquelle la symétrie de révolution d'ordre n et la symétrie de révolution d'ordre p présentent le même axe de symétrie (26), **caractérisée en ce que** n et p sont différents.

2. Aide à la mobilité selon la revendication 1, **caractérisée en ce que** n et p n'ont pas de diviseurs communs.

3. Aide à la mobilité selon la revendication 1 ou 2, **caractérisée en ce que** la différence entre n et p est égale à 1.

4. Aide à la mobilité selon l'une des revendications précédentes, **caractérisée en ce que** les liaisons par coopération de formes sont obtenues par des éléments à coopération de formes (18, 20) se trouvant sur le premier composant (6), le deuxième composant (10) et l'élément de liaison (8).

5. Aide à la mobilité selon la revendication 4, **caractérisée en ce que** les éléments à coopération de formes pour relier le premier composant (6) à l'élément de liaison (8) sont agencés par rapport à l'axe de symétrie (26) à une distance autre que celle des éléments à coopération de formes pour relier le deuxième composant (10) à l'élément de liaison (8).

6. Aide à la mobilité selon l'une des revendications précédentes, **caractérisée en ce que** le premier composant (6) et le deuxième composant (10) sont précontraints l'un vers l'autre par au moins un élément de précontrainte.

7. Aide à la mobilité selon la revendication 6, **caractérisée en ce que** l'élément de précontrainte comporte un élément à ressort, en particulier un ressort de traction.

8. Aide à la mobilité selon l'une des revendications précédentes, **caractérisée en ce que** le premier composant (6) ou le deuxième composant (10) est un dossier ou une surface d'assise de l'aide à la mobilité.

9. Aide à la mobilité selon l'une des revendications précédentes, **caractérisée en ce que** le premier composant (6) ou le deuxième composant (10) est relié à un élément de fixation d'une roue de l'aide à la mobilité, en particulier d'une roue directrice.
